# EUROPÄISCHE PATENTSCHRIFT

(11) **EP 4 051 547 B1**
(45) Veröffentlichungstag und Bekanntmachung des Hinweises auf die Patenterteilung: **03.07.2024**
(21) Anmeldenummer: 20799691.9
(22) Anmeldetag: 28.10.2020
(51) Int. Cl.: B60T 8/17, B60T 8/172, B60T 17/22

(54) **VERFAHREN ZUR SCHNELLBREMSUNG EINES SCHIENENFAHRZEUGS MIT DEFINIERTEN BREMSVORGABEN**
METHOD FOR RAPID BRAKING OF A RAIL VEHICLE WITH DEFINED BRAKING SPECIFICATIONS
PROCÉDÉ DE FREINAGE RAPIDE D'UN VÉHICULE FERROVIAIRE À SPÉCIFICATIONS DE FREINAGE DÉFINIES

(30) Priorität: 30.10.2019 DE 102019129328
(43) Veröffentlichungstag der Anmeldung: 07.09.2022
(73) Patentinhaber: KNORR-BREMSE Systeme für Schienenfahrzeuge GmbH, 80809 München (DE)
(72) Erfinder: SCHMIDT, Maximilian, 80797 München (DE)
(86) Internationale Anmeldenummer: PCT/EP2020/080321
(87) Internationale Veröffentlichungsnummer: WO 2021/083974

(56) Entgegenhaltungen:
- EP-A2- 1 902 918
- EP-A2- 2 511 146
- DE-A1-102008 018 873
- DE-A1-102012 203 132
- DE-A1-102016 103 352

## Beschreibung

Die Erfindung betrifft ein Verfahren zur Schnellbremsung eines Schienenfahrzeugs mit definierten Bremsvorgaben, eine Steuerungsvorrichtung, die dazu konfiguriert ist, das Verfahren durchzuführen, und ein Computerprogrammprodukt, das dazu konfiguriert ist, das Verfahren automatisiert durchzuführen.

In heutigen Zugsystemen wird eine Bremsung durch Eingabegeräte, wie beispielsweise Bremshebel, Schlagknöpfe oder Empfänger externer Signale, zentral, zum Beispiel im Führerhaus, ausgelöst. Dabei wird zwischen einer Schnellbremsung und einer Betriebsbremsung unterschieden. Die Schnellbremsung garantiert mit hoher Zuverlässigkeit einen festen Bremsweg, während die Betriebsbremsung variable Bremskräfte erzeugen kann, jedoch weniger zuverlässig ist. Die Zuverlässigkeit wird in den Bremsarten hauptsächlich durch die an der Bremsung beteiligten Bremskrafterzeuger und deren Steuerungen beeinflusst. Normalerweise ist eine höhere Zuverlässigkeit nur auf Kosten einer reduzierten Komplexität und damit Variabilität möglich.

So sind normalerweise in der Betriebsbremsung Bremskrafterzeuger und Steuerungen beteiligt, welche auf Betriebskosten und Komfort optimiert sind, beispielsweise elektrodynamische Bremsen, um Bremsenergie zurückzugewinnen und Verschleiß zu minimieren, und/oder elektronisch gesteuerte, pneumatische Bremsen, um die Verzögerung zu regeln oder Bremskräfte zugweit adhäsionsoptimiert zu verteilen. Im Gegensatz dazu sind in der Schnellbremsung normalerweise nur elektrisch aktivierte und nur mechanisch geregelte Bremskrafterzeuger beteiligt, welche auf Zuverlässigkeit optimiert sind, zum Beispiel pneumatische Reibungsbremsen mit elektrischen Notbremsventilen und lokaler, pneumatischer Lastkompensation. Somit ist in der Schnellbremsung keine optimierte Bremsung im Sinne der Verwendung variabler, reibungsfreier bzw. reibungsverminderter oder intelligenter Bremskrafterzeuger und deren Steuerungen bei gleichzeitiger Gewährleistung der für eine Schnellbremsung geforderten Zuverlässigkeit möglich.

Aus der DE 10 2016 103352 A1 ist es bekannt, eine Schnellbremsung eines Schienenfahrzeugs zumindest teilweise unter Einsatz eines Betriebsbremssystems durchzuführen.

In Anbetracht der obigen Ausführungen ist es daher Aufgabe der vorliegenden Erfindung, ein Verfahren zur Schnellbremsung eines Schienenfahrzeugs mit definierten Bremsvorgaben, eine entsprechende Steuerungsvorrichtung und ein entsprechendes Computerprogrammprodukt bereitzustellen, durch das bzw. die variablen Bremssysteme unter Einhaltung der Anforderungen an die Zuverlässigkeit einer Schnellbremsung situationsabhängig eingesetzt werden können.

Die Aufgabe wird durch ein Verfahren, eine Steuerungsvorrichtung und ein Computerprogrammprodukt gemäß den unabhängigen Ansprüchen gelöst. Vorteilhafte Weiterbildungen der Erfindung sind in den abhängigen Ansprüchen enthalten.

So ist ein Verfahren zur Schnellbremsung eines Schienenfahrzeugs mit definierten Bremsvorgaben vorgesehen, das die folgenden Schritte aufweist:
(SA) Auslösen eines Schnellbremsungsbefehls,
(SB) Zurückhalten eines Schnellbremsungsvorgangs und Einleiten eines Bremsvorgangs über ein Betriebsbremssystem,
(SC) Überwachen der Bremswirkung des über das Betriebsbremssystem veranlassten Bremsvorgangs, und
(SD) Beenden des Zurückhaltens des Schnellbremsungsvorgangs und Einleiten des Schnellbremsungsvorgangs über ein Schnellbremssystem, wenn durch die Überwachung keine ausreichende Bremswirkung detektiert wird.

Wie eingangs ausgeführt, erfolgt eine Schnellbremsung bisher über das Auslösen eines Schnellbremsungsbefehls, beispielsweise über einen Bremshebel, einen Schlagknopf, einen Empfang externer Signale oder anderweitige Auslösemechanismen, wodurch ein Schnellbremsungsvorgang über ein Schnellbremssystem ausgelöst wird. Im Gegensatz dazu ist erfindungsgemäß vorgesehen, einen solchen Schnellbremsungsvorgang zunächst zurückzuhalten und für die Schnellbremsung einen Bremsvorgang über das Betriebsbremssystem einzuleiten. Die Bremswirkung des über das Betriebsbremssystem veranlassten Bremsvorgangs wird dabei in Schritt (SC) überwacht, um die Einhaltung der für die Schnellbremsung definierten Bremsvorgaben verifizieren zu können. Dies kann beispielsweise anhand der Einhaltung vorbestimmter absoluter Grenzwerte und/oder relativer Grenzwerte erfolgen. Wird auf Basis der Überwachungsergebnisse festgestellt, dass die Bremswirkung des Betriebsbremssystems im Sinne der definierten Bremsvorgaben nicht mehr ausreichend ist, wird das Zurückhalten des Schnellbremsvorgangs beendet und der Schnellbremsvorgang über das Schnellbremssystem eingeleitet. Die Überwachungsergebnisse sind dabei nicht auf die Einhaltung vorgegebener Grenzwerte beschränkt, sondern können auch eine Korrekturmöglichkeit des Bremsvorgangs über das Betriebsbremssystem im Hinblick auf die grundsätzliche Korrekturmöglichkeit als auch die hierfür erforderlichen Korrekturbedingungen berücksichtigen. Beispielsweise könnte eine in Bezug auf vorgegebene Grenzwerte zu geringe Bremskraft detektiert werden. Diese wäre ggf. durch die Erhöhung der Bremskraft zur Erzielung des finalen Schnellbremsergebnisses je nach Betriebsbremssystem grundsätzlich technisch realisierbar, würde unter Umständen den Optimierungszielen des Betriebsbremssystems, wie einer verschleißschonenden Bremsung entgegenstehen. Das Überwachungsergebnis würde somit das Beenden des Zurückhaltens des Schnellbremsungsvorgangs und Einleiten des Schnellbremsungsvorgangs über das Schnellbremssystem vorsehen. Sofern die Überwachung keine nicht tolerierbaren Abweichungen zu den definierten Bremsvorgaben für die Schnellbremsung durch den Bremsvorgang über das Betriebsbremssystem detektiert bzw. diese zwar auftreten, aber innerhalb eines vorgegebenen Rahmens korrigierbar sind, kann Schritt (SD) auch entfallen und der Schnellbremsbefehl alleinig über den Bremsvorgang über das Betriebsbremssystem ausgeführt werden.

Gemäß obiger Ausführungen wird erfindungsgemäß der Begriff der Schnellbremsung nicht auf die Ausführung eines Schnellbremsungsvorgangs über das Schnellbremssystem beschränkt, sondern umfasst gleichermaßen die Ausführung eines Bremsvorgangs über das Betriebsbremssystem mit Rückhaltung des Schnellbremsvorgangs über das Schnellbremssystem, solange im Sinne einer ausreichenden Bremswirkung die Bremssysteme zumindest im Ergebnis gleichwirkend arbeiten oder anderweitiger Signale, wie dies später noch beschrieben wird, die Rückhaltung des Schnellbremsvorgangs über das Schnellbremssystem beenden oder direkt das Schnellbremssystem ansteuern. Mit anderen Worten ist hier lediglich der Schnellbremsungsvorgang auf die Verwendung des Schnellbremssystems beschränkt, während die Schnellbremsung an sich gemäß der vorliegenden Erfindung sowohl über den Bremsvorgang des Betriebsbremssystems mit Zurückhaltung des Schnellbremsungsvorgangs als auch über den Schnellbremsungsvorgang über das Schnellbremssystem ausgeführt werden kann. Dabei muss Schritt (SD) des erfindungsgemäßen Verfahrens nicht notwendigerweise ausgeführt werden, sofern die Überwachung bis zur Beendigung der Schnellbremsung eine ausreichende Bremswirkung über das Betriebsbremssystem detektiert oder anderweitige Signale dem entgegenstehen.

Somit kann erfindungsgemäß für die Schnellbremsung das Betriebsbremssystem mit den genannten Vorteilen der Variabilität und Optimierungsmöglichkeiten eingesetzt werden, wobei die Zuverlässigkeit durch die Überwachung der Bremswirkung und mögliche Beendigung des Zurückhaltens des Schnellbremsvorgangs durch das Schnellbremssystem gewährleistet wird.

Erfindungsgemäß wird Schritt (SD) in Abhängigkeit von vorbestimmten Risikoklassen eingeleitet.

Demnach werden die in Schritt (SC) überwachten Größen, also zumindest die Bremswirkung und ggf. ereignisabhängige Signale, je nach vorbestimmten Risikoklassen unterschiedlich bewertet. Die unterschiedliche Bewertung kann sich dabei auf die Wahrscheinlichkeit einer nicht ausreichenden Bremswirkung beziehen, so dass die Überwachungsgrößen selbst in Risikoklassen, d.h. Signalrisikoklassen, eingeteilt werden. Beispielsweise kann eine Bremskraft in einem grenzwertnahen Bereich bei gleichzeitigem Bremsweg in einem grenzwertnahen Bereich zu einem Beenden des Zurückhaltens des Schnellbremsungsvorgangs führen, während der Bremsvorgang über das Betriebsbremssystem fortgesetzt wird, wenn sich nur eine der Größen in einem grenzwertnahen Bereich bewegt. Alternativ oder ergänzend ist es aber auch möglich, Risikoklassen auf Basis ereignisabhängiger Signale, d.h. Ereignisrisikoklassen, oder auf Basis von Zugdaten, d.h. Zugrisikoklassen, zu bilden.

Beispielsweise können Ereignisrisikoklassen die aktuellen Umgebungsbedingungen, wie Witterungsverhältnisse oder Besiedelungsdichte, berücksichtigen, während Zugrisikoklassen, die Zuggeschwindigkeit, Zuglänge, das Zuggewicht und/oder die Personen und/oder Güter des Zugs berücksichtigen. Je nach vorgegebener Risikoklasse können die für die Bremswirkung angesetzten Grenzwerte und/oder die Tolerierbarkeit ereignisabhängiger Signale für eine Fortsetzung des Bremsvorgangs über das Betriebsbremssystem oder für das Beenden des Zurückhaltens des Schnellbremsvorgangs über das Schnellbremssystem und dessen Einleiten angepasst werden. Die verschiedenen Risikoklassen können auch kombiniert und in einer hiervon abhängigen Auswertung berücksichtigt werden. Somit erhöht sich die Flexibilität des erfindungsgemäßen Verfahrens. In einer vorteilhaften Ausgestaltung des Verfahrens wird der über den in Schritt (SA) ausgelösten Schnellbremsungsbefehl eingeleitete Bremsvorgang über das Betriebsbremssystem derart angesteuert, dass der Bremsvorgang über das Betriebsbremssystem zum Verhalten des Schnellbremsungsvorgangs über das Schnellbremssystem korrespondiert, insbesondere dieses nachbildet.

Da der Schnellbremsvorgang über das Schnellbremssystem hier zunächst zurückgehalten wird, korrespondiert der Bremsvorgang über das Betriebsbremssystem gemäß der vorstehenden Ausgestaltung quasi zu dem Verhalten des Schnellbremsvorgangs über das Schnellbremssystem, wenn dieser direkt eingeleitet worden wäre bzw. bildet diesen nach. Sofern sich für den Schnellbremsvorgang über das Schnellbremssystem für eine Schnellbremsung gemäß definierter Bremsvorgaben Änderungen in der Parametrisierung und/oder Schnellbremsungsvorgangscharakteristik des Schnellbremsvorgangs ergeben, hätte dies bevorzugt somit auch entsprechende Auswirkungen auf die Vorgaben für die Bremsung über das Betriebsbremssystem. Die Parametrisierung betrifft dabei die zur Funktionsausübung vorzusehenden Betriebsparameter, während die Schnellbremsvorgangscharakteristik den zeitlichen Verlauf der Bremswirkung oder zumindest die ausgeübte Bremswirkung zu vorgegebenen Zeitpunkten widerspiegelt. In dem Fall, in dem der Bremsvorgang über das Betriebsbremssystem zum Schnellbremsungsvorgang über das Schnellbremssystem korrespondiert, ist lediglich eine gleiche Bremswirkung gefordert, so dass hier ein Bremsergebnis im Vordergrund steht. Hierdurch können Optimierungspotentiale des Betriebsbremssystems ausgenutzt werden, solange das Bremsergebnis im Sinne der definierten Bremsvorgaben tolerierbar ist. In anderen Worten kann auch von einem gegenüber dem Schnellbremssystem im Sinne des Bremsergebnisses gleichwirkenden oder äquivalenten Betriebsbremssystem gesprochen werden. Bei einer Nachbildung des Schnellbremsungsvorgangs durch das Betriebsbremssystem wird nicht oder nicht nur das Bremsergebnis betrachtet, sondern auch eine Parametrisierung und Schnellbremsungsvorgangscharakteristik des Schnellbremssystems durch das Betriebsbremssystem zumindest teilweise übernommen. Demnach wird das Betriebsbremssystem so angesteuert, dass das Schnellbremssystem zumindest teilweise imitiert wird. Hierdurch können die Variabilität oder auch Optimierungspotentiale des Betriebsbremssystems unter Umständen nicht oder nur eingeschränkt genutzt werden, der direkte Vergleich erleichtert jedoch die Überwachung und erhöht die Sicherheit. Je nach technischen Gegebenheiten können Mischformen eines korrespondierenden und nachbildenden Betriebsbremssystems vorgesehen werden.

In einer Variante des Verfahrens erfolgt das Einleiten des Schnellbremsungsvorgangs über das Schnellbremssystem parallel zum Bremsvorgang über das Betriebsbremssystem.

Der Bremsvorgang über das Betriebsbremssystem wird in diesem Fall nicht oder zumindest über einen vorbestimmten Zeitraum nicht unterbrochen. Hierdurch kann der Schnellbremsungsvorgang über das Schnellbremssystem weiter durch den Bremsvorgangs des Betriebsbremssystems unterstützt oder zumindest eine Anlaufphase des Schnellbremsungsvorgangs über das Schnellbremssystem überbrückt werden.

In einer anderen Variante des Verfahrens löst das Einleiten des Schnellbremsungsvorgangs über das Schnellbremssystem den Bremsvorgang über das Betriebsbremssystem ab.

Bei einer solchen Ablösung wird der Bremsvorgang über das Betriebsbremssystem mit Einleiten des Schnellbremsungsvorgangs über das Schnellbremssystem angehalten. Mit den jeweiligen Bremssystemen verbundene Verzögerungszeiten sind dabei zu berücksichtigen. Das Betriebsbremssystem wird somit nicht länger bremsbedingten Belastungen ausgesetzt. Zudem vereinfacht sich die Steuerung durch die reduzierte Anzahl der eingesetzten Bremssysteme.

In einer Weiterbildung des Verfahrens wird die Bremswirkung anhand einer aktuellen Bremskraft und/oder eines Bremswegs und/oder des zeitlichen Verlaufs der aktuellen Bremskraft und/oder des Bremswegs überwacht.

Zur Überwachung der aktuellen Bremskraft können entsprechende Sensoren, wie Drucksensoren, im Bereich der Bremskrafterzeuger eingesetzt werden. Der Bremsweg kann beispielsweise durch Geschwindigkeitssensoren, Verzögerungssensoren, Radarsensoren oder GPS-Daten, über die auf einen Bremsweg geschlossen werden kann, detektiert werden. Beide Größen können dann zum Beispiel mit Vorgabewerten, die zum jeweiligen Zeitpunkt eingehalten werden sollten, verglichen werden. Ebenso ist es möglich, Grenzwerte für diese Überwachungsgrößen auf einen zeitlichen Verlauf zu beziehen. Demnach sollte die Bremskraftentwicklung zum Beispiel eine vorgegebene Steigung aufweisen oder um einen konstanten Wert nur zwischen einem vorgegebenen maximalen und minimalen Wert schwanken. Im Sinne eines Bremswegs sollte sich dieser über die Zeit vergrößern und nicht über wesentliche Streckenabschnitte konstant bleiben. Mit anderen Worten kann hier eine Überwachung der Bremskraftänderungen und/oder Bremswegänderungen herangezogen werden. Eine Kombination der Überwachungsgrößen und/oder ihrer Änderungen ermöglicht zudem eine redundante Überwachung, aber auch eine Plausibilitätsprüfung. Die Bremskraft und der Bremsweg sind dabei einfach zu überwachen und bieten im Sinne einer Einhaltung definierter Bremsvorgaben eine verlässliche Basis.

Neben der Überwachung der Bremswirkung anhand der Bremskraft und/oder des Bremswegs können auch andere Überwachungsgrößen herangezogen werden, die Auskunft auf die aktuelle Bremswirkung und/oder deren Entwicklung geben. Bei einer Überwachung der Temperatur der Bremskrafterzeuger können nicht nur Unregelmäßigkeiten bei außerhalb des Erwartbaren liegenden Temperaturerhöhungen detektiert, sondern auch ein drohender Bremsausfall oder entsprechend hoher Verschleiß, der die Einsatzdauer beschränken kann, prognostiziert werden. Letztlich kann die Bremswirkung aber auch je nach eingesetztem Bremssystem direkt temperaturabhängig sein.

In einer weiteren bevorzugten Ausgestaltung des Verfahrens werden in Schritt (SC) neben der Bremswirkung auch ereignisabhängige Signale überwacht, die das Beenden des Zurückhaltens des Schnellbremsungsvorgangs und Einleiten des Schnellbremsungsvorgangs über das Schnellbremssystem in Schritt (SD) auslösen können.

Da eine Schnellbremsung üblicherweise im Zusammenhang mit einer Gefahrensituation ausgelöst wird, können auch Ereignisse, die das mit dem jeweiligen Auslöser verbundene Risiko erhöhen, das Beenden der Zurückhaltung des Schnellbremsungsvorgangs bedingen. Dies kann darin begründet sein, dass mit erhöhtem Risiko eine Überwachung der Bremswirkung des Betriebsbremssystems als nicht mehr ausreichend erachtet wird und die Zuverlässigkeit des Schnellbremssystems bevorzugt wird. Als Beispiele für solche ereignisabhängigen Signale seien hier zwischenzeitlich detektierte Streckenhindernisse, eine Einfahrt in stärker besiedelte Gebiete, wie eine Stadt, oder auch ein Feuer im Zug oder anderweitige Ereignisse, die die Zuverlässigkeit der eingesetzten Überwachung für die Bremswirkung des Betriebsbremssystems in Frage stellen können, genannt. Im Gegensatz zu den im Folgenden noch angeführten Schnellbremsungsvorgangssignalen, die von der Überwachung in Schritt (SC) unabhängig sind, werden die ereignisabhängigen Signale in der hier beschriebenen Ausgestaltung in Schritt (SC) überwacht.

Insbesondere werden in Schritt (SC) schienenfahrzeugseitige und/oder schienenstreckenseitige Signale überwacht.

Die Überwachung schienenfahrzeugseitiger und/oder schienenstreckenseitiger Signale kann sowohl die Signale im Hinblick auf die Bremswirkung des Betriebsbremssystems als auch die ereignisabhängigen Signale umfassen. Hierbei kann es vorteilhaft sein, die Bremswirkung repräsentierende Signale und/oder ereignisabhängige Signal sowohl auf Basis von schienenfahrzeugseitigen als auch schienenstreckenseitigen Signalen zu überwachen, um beispielsweise bezogen auf eine Überwachungsgröße eine Redundanz vorzusehen oder aber auch eine Plausibilitätsprüfung zu ermöglichen. Zudem sind nicht alle Überwachungsgrößen immer nur durch entweder schienenfahrzeugseitige oder schienenstreckenseitige Signale abbildbar oder ist ein Schienenfahrzeug mit allen jeweils erforderlichen Überwachungseinrichtungen ausgestattet.

In einer bevorzugten Ausgestaltung wird in Schritt (SA) die Schnellbremsung über das Schnellbremssystem direkt eingeleitet, wenn das Auslösen des Schnellbremsungsbefehls in Schritt (SA) durch ein vorbestimmtes Schnellbremsungsvorgangssignal initiiert wird.

Im Gegensatz zu den in Schritt (SC) überwachten Überwachungsgrößen in Bezug auf die Bremswirkung und/oder den ereignisabhängigen Signalen handelt es sich bei einem vorbestimmten Schnellbremsungsvorgangssignal um ein Signal, das hiervon unabhängig einen Schnellbremsungsvorgang über das Schnellbremssystem auslöst. Konkret wird hierdurch ein Schnellbremsungsbefehl gegeben, der direkt den Schnellbremsungsvorgang über das Schnellbremssystem einleitet. Ein solches Schnellbremsungsvorgangssignal kann über eine hierfür vorgesehene Eingabeeinheit, wie einen gesonderten Bremshebel, Schlagknopf oder dergleichen, ausgelöst oder über externe Signale empfangen werden. Bei Auslösen des Schnellbremsvorgangs über ein Schnellbremsungsvorgangssignal kann die direkte Ansteuerung des Schnellbremssystems durch eine Überbrückung der Zurückhaltung des Schnellbremsvorgangs, durch ein direktes Beenden dieser Zurückhaltung oder durch eine direkte Signalanbindung zur direkten Ansteuerung des Schnellbremssystems, also ohne Überbrückung der Zurückhaltung oder deren Beendigung, realisiert werden. In besonderen Gefahrensituationen ist es somit möglich, den Schnellbremsungsvorgang über das Schnellbremssystem direkt einzuleiten.

Insbesondere wird das Beenden des Zurückhaltens des Schnellbremsungsvorgangs und Einleiten des Schnellbremsungsvorgangs über das Schnellbremssystem in Schritt (SD) durch ein oder das vorbestimmte Schnellbremsungsvorgangssignal ausgelöst.

Vergleichbar zu einer direkten Einleitung des Schnellbremsungsvorgangs über das Schnellbremssystem in Schritt (SA) kann bei Ausbleiben des Schnellbremsungsvorgangssignals in Schritt (SA) ein Beenden des Zurückhaltens des Schnellbremsungsvorgangs ebenfalls über ein Schnellbremsungsvorgangssignal initiiert werden. Somit kann jederzeit unabhängig von der Überwachung in Schritt (SC) der Schnellbremsungsvorgang eingeleitet werden. In diesem Zusammenhang kann zwischen überwachten Auslösern im Sinne der Überwachung der Bremswirkung und ggf. ereignisabhängigen Signalen und dem Schnellbremsungsvorgangssignal als nicht überwachtem Auslöser für das Beenden des Zurückhaltens des Schnellbremsvorgangs unterschieden werden. Durch ein Schnellbremsungsvorgangssignal kann das Schnellbremssystem direkt angesteuert werden oder auch die entsprechende Einheit zum Beenden des Zurückhaltens des Schnellbremsungsvorgangs. In ersterem Fall wird insbesondere ein weiteres Signal an das Betriebsbremssystem zur Beendigung des Bremsvorgangs über das Betriebsbremssystem weitergeleitet. Alternativ kann der Vorgang zentral gesteuert werden.

Das Schnellbremsungsvorgangssignal oder die Schnellbremsungsvorgangssignale können für das Auslösen der Schnellbremsung in Schritt (SA) und das Beenden des Zurückhaltens des Schnellbremsungsvorgangs identisch sein. Insofern ergibt sich kein Unterscheidungserfordernis in der Begrifflichkeit des Schnellbremsungsvorgangssignals. Ebenso können gleiche Eingabeeinheiten genutzt werden. Alternativ oder ergänzend können jeweils auch unterschiedliche Schnellbremsungsvorgangssignale und ggf. unterschiedliche Eingabeeinheiten genutzt werden. Sofern diesbezüglich eine Unterscheidung in den Begrifflichkeiten erforderlich sein sollte, richtet sich der Ausdruck initiales Schnellbremsungsvorgangssignal auf ein solches Signal in Schritt (SA), während ein intermittierendes Schnellbremsungsvorgangssignal das Beenden des Zurückhaltens des Schnellbremsungsvorgangs betrifft.

Darüber hinaus ist die vorliegende Erfindung auf eine Steuerungsvorrichtung gerichtet, die dazu konfiguriert ist, das erfindungsgemäße Verfahren durchzuführen, und die eine Steuereinheit, die dazu konfiguriert ist, zumindest einen Schnellbremsungsbefehl zu empfangen und auf Basis des Schnellbremsungsbefehls ein Betriebsbremssystem und/oder ein Schnellbremssystem anzusteuern, aufweist.

Die Steuereinheit kann hierzu zumindest eine Empfangseinheit zum Empfang des Schnellbremsungsbefehls und/oder eine Eingabeeinheit zur Eingabe und damit zum Empfang des Schnellbremsungsbefehls umfassen. Die Steuereinheit kann das Betriebsbremssystem und/oder das Schnellbremssystem direkt ansteuern. Alternativ kann auch eines der Bremssysteme indirekt angesteuert werden. Durch die Steuereinheit können die Vorteile des erfindungsgemäßen Verfahrens steuerungstechnisch umgesetzt werden.

In einer bevorzugten Ausgestaltung der Steuerungsvorrichtung ist die Steuereinheit dazu konfiguriert ist, die Bremswirkung des Betriebsbremssystems repräsentierende Überwachungssignale, insbesondere die Bremswirkung des Betriebsbremssystems repräsentierende Überwachungssignale und ereignisabhängige Signale, zu empfangen.

Die Steuereinheit weist hierzu bevorzugt zumindest eine Sensoreinheit auf, die die Bremswirkung des Betriebsbremssystems repräsentierende Überwachungssignale und/oder ereignisabhängige Signale erfassen kann. Infolgedessen kann die Steuereinheit unabhängig von vorgelagerten Erfassungseinheiten operieren und Störungen möglicher Signalübertragungswege behindern nicht die Ausführung des erfindungsgemäßen Verfahrens. Alternativ oder ergänzend kann die Steuereinheit zum Empfang entsprechender externer Signale, d.h. die Bremswirkung des Betriebsbremssystems repräsentierende Überwachungssignale und/oder ereignisabhängige Signale, ausgebildet sein. Hierdurch kann die Anzahl berücksichtigbarer Überwachungsgrößen erhöht und somit die Zuverlässigkeit oder auch Flexibilität der Überwachung verbessert werden.

Gemäß einer Weiterbildung weist die Steuereinheit eine Auswerteeinheit auf, die dazu konfiguriert ist, die Bremswirkung des Betriebsbremssystems repräsentierende Überwachungssignale, insbesondere die Bremswirkung des Betriebsbremssystems repräsentierende Überwachungssignale und ereignisabhängige Signale, auszuwerten und in Abhängigkeit der Auswertung den Bremsvorgang über ein Betriebsbremssystem fortzusetzen oder das Beenden des Zurückhaltens des Schnellbremsungsvorgangs und Einleiten des Schnellbremsungsvorgangs über das Schnellbremssystem vorzusehen.

Die Auswerteeinheit vergleicht beispielsweise die die Bremswirkung des Betriebsbremssystems repräsentierende Überwachungssignale und ggf. ereignisabhängige Signale mit in einem Speicher hinterlegten Grenzwerten und/oder mit anderweitigen Vorgaben und/oder wendet einen Auswertealgorithmus an. Insbesondere ist die Auswerteeinheit dazu ausgebildet, verschiedene Risikoklassen, die sich beispielsweise anhand der Überwachungsgrößen ergeben oder durch Ereignisse oder durch den jeweiligen Zug definierbar sind, zu berücksichtigen und die Auswahl der Grenzwerte und/oder der anderweitigen Vorgaben entsprechend vorzunehmen und/oder den Auswertealgorithmus entsprechend anzupassen. Sofern die Auswertung ergibt, dass die Überwachungsgrößen ihre Grenzwerte und/oder Vorgaben gemäß des Vergleichs oder des Auswertealgorithmus einhalten, wird der Bremsvorgang über das Betriebsbremssystem fortgesetzt. Andernfalls wird das Zurückhalten des Schnellbremsvorgangs beendet und der Schnellbremsvorgang über das Schnellbremssystem eingeleitet. Die Steuereinheit kann somit mit Auslösen des Schnellbremsbefehls autark operieren.

In einer Ausgestaltung ist Steuereinheit dazu konfiguriert, das Schnellbremssystem auf Basis eines vorbestimmten Schnellbremsungsvorgangssignals direkt anzusteuern oder das Zurückhalten des Schnellbremsungsvorgangs zu beenden und den Schnellbremsungsvorgang über das Schnellbremssystem einzuleiten.

Die Steuereinheit ist somit einerseits nicht auf die Ausführung einer Schnellbremsung mit zumindest anfänglichem Bremsvorgang über das Betriebsbremssystem beschränkt, sondern kann direkt das Schnellbremssystem ansteuern. Hierdurch wird neben der Vermeidung von im Ernstfall ungewünschter Verzögerungen auch das Betriebsbremssystem geschont, das nicht unnötig kurzfristig anläuft. Selbst wenn in Schritt (SA) des erfindungsgemäßen Verfahrens noch kein Schnellbremsungsvorgangssignal vorliegt, kann das Zurückhalten des Schnellbremsvorgangs jederzeit unabhängig von den überwachten Größen beendet und der Schnellbremsungsvorgang über das Schnellbremssystem eingeleitet werden.

Im Falle eines Schnellbremsungsvorgangssignals in Schritt (SA) kann die Ansteuerung des Schnellbremssystems über eine Überbrückung oder direkte der Ansteuerung des Schnellbremssystems im Sinne eines jeweils separaten Ausgangs seitens der Steuereinheit erfolgen. Alternativ kann das Ansteuerungssignal über die auch zum Zurückhalten des Schnellbremsungsvorgangs genutzte Signalübertragungsstrecke geleitet werden, wobei das Betriebsbremssystem nicht angesteuert und das Zurückhalten des Schnellbremsvorgangs aufgehoben wird. Letztlich kann es aus Sicherheitsgründen auch vorteilhaft sein, für eine direkte Ansteuerung des Schnellbremssystems alternativ oder ergänzend eine von der Steuereinheit unabhängige Signalübertragung vorzusehen. Sofern dies einer alternativen Maßnahme entspricht, wird über die Steuereinheit kein Schnellbremsbefehl gemäß Schritt (SA) ausgeführt und die Schnellbremsung entspricht einem separat, also unabhängig, eingeleiteten Schnellbremsungsvorgang über das Schnellbremssystem. Die beschriebenen Varianten oder auch Kombinationsmöglichkeiten zur direkten Ansteuerung des Schnellbremssystems sind auf ein Beenden des Zurückhaltens des Schnellbremsungsvorgangs über das Schnellbremssystem und Einleiten des Schnellbremsungsvorgangs auf Basis eines vorbestimmten Schnellbremsungsvorgangssignals übertragbar.

Insbesondere ist die Steuereinheit dazu konfiguriert ist, schienenfahrzeugseitige und/oder schienenstreckenseitige Überwachungsgrößen und/oder Schnellbremsungsvorgangssignale zu empfangen.

Die mit dem Empfang und damit mit der Nutzungsmöglichkeit schienenfahrzeugseitiger und/oder schienenstreckenseitiger Überwachungssignale bzw. Überwachungsgrößen verbundenen Vorteile ergeben sich analog zur entsprechenden Verfahrensausgestaltung. Dies ist gleichermaßen auf den Empfang schienenfahrzeugseitiger und/oder schienenstreckenseitiger Schnellbremsungsvorgangssignale übertragbar. Hierzu sei angemerkt, dass sich der Begriff der Überwachungssignale auf die die Bremswirkung repräsentierenden Überwachungssignale bezieht, während der Begriff der Überwachungsgrößen die Überwachungssignale und ereignisabhängigen Signale umfasst.

Insbesondere ist die vorstehende Steuerungsvorrichtung eine zentrale Steuerungsvorrichtung einer zentralen Leitstelle.

Die Steuerungsvorrichtung muss demnach nicht für jedes Bremssystem vorgesehen werden. Zudem sind Züge durch Änderung der signaltechnischen Ansteuerung der Bremsen in einfacher Weise zur Umsetzung des erfindungsgemäßen Verfahrens nachrüstbar, ohne eine Modifikation der Bremsen selbst vornehmen zu müssen.

Als zentrale Steuerungsvorrichtung kann beispielsweise die im Führerhaus eines Schienenfahrzeugs befindliche Leitsteuerung, auch als Führerbremshebel oder Master Controller bzw. MC bezeichnet, genutzt werden. Hierdurch kann durch Vorsehung entsprechender Anzeigen und/oder Bedieneinheiten eine direkte Überwachungs- und/oder Eingriffsmöglichkeit für den Zugführer oder anderweitig autorisiertes Personal geschaffen werden. Gleichermaßen ist es möglich, über die zentrale Steuerung Schnellbremsungen zu protokollieren und zu Auswertezwecken, insbesondere in Verbindung mit anderen Daten der Leitsteuerung, heranzuziehen.

Letztlich betrifft die vorliegende Erfindung auch ein Computerprogrammprodukt, das dazu konfiguriert ist, die erfindungsgemäßen Verfahrensschritte automatisiert vorzunehmen.

Im Folgenden wird die Erfindung anhand einer Ausführungsform unter Hinzuziehung der beigefügten Figuren näher erläutert. Die Figuren zeigen im Einzelnen:
- **Figur** 1: zeigt ein Ablaufdiagramm zur Darstellung des Ablaufs einer Ausführungsform des erfindungsgemäßen Verfahrens.
- **Figur** 2: zeigt ein Blockschaltbild einer Steuerungsvorrichtung einer Ausführungsform der erfindungsgemäßen Steuerungsvorrichtung.

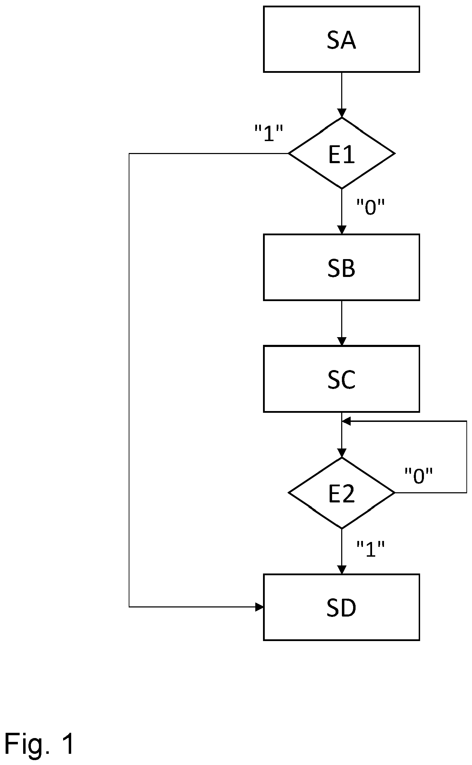

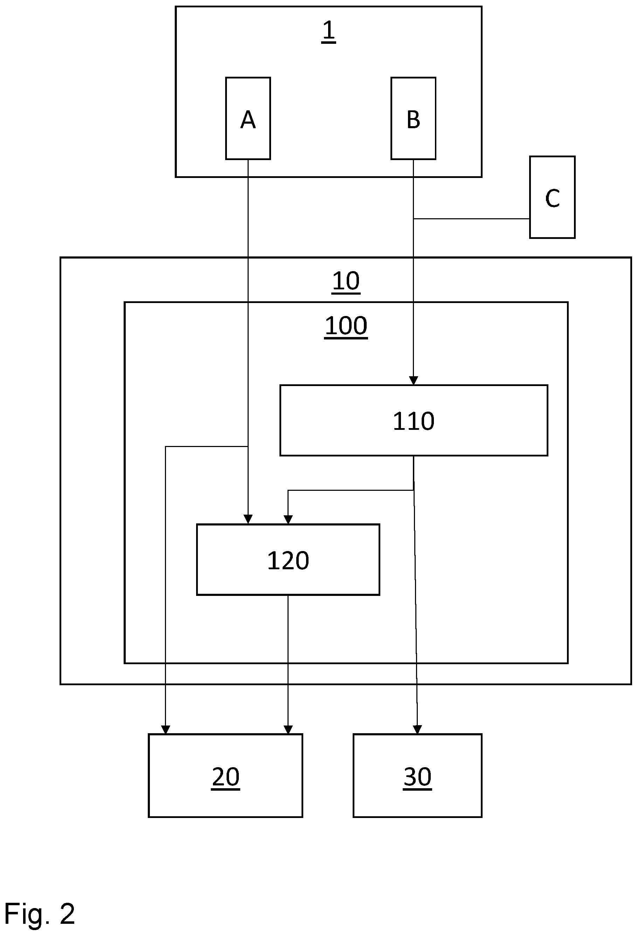

**Figur** 1 zeigt ein Ablaufdiagramm zur Darstellung einer Ausführungsform des erfindungsgemäßen Verfahrens, wobei im Schritt SA ein Schnellbremsungsbefehl ausgelöst wird. Dabei wird im Entscheidungsschritt E1 zwischen einem Schnellbremsungsbefehl, der durch ein Schnellbremsungsvorgangssignal A ausgelöst wird, und einem Schnellbremsungsbefehl, der durch ein Schnellbremsungssignal B ausgelöst wird, unterschieden. Liegt ein Schnellbremsungsvorgangssignal A zum Auslösen der Schnellbremsung vor, hier durch "1" als positive Entscheidungsrückmeldung veranschaulicht, so wird direkt das Schnellbremssystem 20 zur Schnellbremsung gemäß Schritt SD angesteuert und somit der Schnellbremsungsvorgang über das Schnellbremssystem 20 eingeleitet (siehe hierzu Fig. 2). Liegt kein Schnellbremsungsvorgangssignal A an, wird also der Schnellbremsungsbefehl über ein Schnellbremsungssignal B ausgelöst, das zunächst keine direkte Ansteuerung des Schnellbremssystems 20 erfordert, wird gemäß negativer Entscheidungsrückmeldung, hier "0", das Verfahren gemäß Schritt SB fortgeführt. In Schritt SB wird der Schnellbremsungsvorgang über das Schnellbremssystem 20 zurückgehalten und ein Bremsvorgang über ein Betriebsbremssystem 30 eingeleitet.

Da der über das Betriebsbremssystem 30 eingeleitete Bremsvorgang bei Auslösen einer Schnellbremsung zumindest im Ergebnis in Bezug auf den Bremsweg und die Bremsdauer zum Schnellbremsvorgang über das Schnellbremssystem 20 wirkungsgleich sein soll, werden in Schritt SC die Bremswirkung des über das Betriebsbremssystem 30 veranlassten Bremsvorgangs überwacht. Zudem werden in der dargestellten Ausführungsform auch ereignisabhängige Signale erfasst und ausgewertet, um beispielsweise weitere oder geänderte Rahmenbedingungen berücksichtigen zu können. Die die Bremswirkung repräsentierenden Größen und die ereignisabhängigen Signal werden unter dem Begriff "Überwachungsgrößen" C zusammengefasst.

Im Entscheidungsschritt E2 wird geprüft, ob zwischenzeitlich, das heißt, während der Einleitung und Ausführung des Bremsvorgangs über das Betriebsbremssystem 30 ein Schnellbremsungsvorgangssignal A empfangen wurde oder die Überwachung der Überwachungsgrößen C eine Grenzwertüberschreitung oder eine Nichteinhaltung anderweitiger Vorgaben detektiert hat. Wäre dies zu bejahen "1", wird das Zurückhalten des Schnellbremsvorgangs über das Schnellbremssystem 20 beendet und der Schnellbremsvorgang über das Schnellbremssystem 20 gemäß Schritt SD eingeleitet. Hinsichtlich der direkten Ansteuerung des Schnellbremssystems 20, wenn der Schnellbremsungsbefehl über ein Schnellbremsungsvorgangssignal A ausgelöst wird, muss der Schritt SD jedoch nicht in jedem Fall das Zurückhalten des Schnellbremsvorgangs beenden. Bei einer negativen Entscheidungsrückmeldung "0" im Entscheidungsschritt E2 wird der Bremsvorgang über das Betriebsbremssystem fortgesetzt, bis sich eine positive Entscheidungsrückmeldung "1" im Entscheidungsschritt E2 ergibt oder der Zug über den Bremsvorgang über das Betriebsbremssystem 30 zum Stillstand gekommen ist.

In **Figur** 2 ist ein Blockschaltbild einer Steuerungsvorrichtung 10 einer Ausführungsform der erfindungsgemäßen Steuerungsvorrichtung dargestellt, die das zu Figur 1 beschriebene Verfahren ausführen kann. Hierzu weist die Steuerungsvorrichtung 10 eine Steuereinheit 100 auf, die wiederum eine Empfangseinheit 110 und eine Auswerteeinheit 120 umfasst. Zudem zeigt das Blockschaltbild eine an die Steuerungsvorrichtung 10 angebundene Eingabeeinheit 1. Die Eingabeeinheit 1 dient der Auslösung eines Schnellbremsungsbefehls gemäß Weiterleitung eines Schnellbremsungsvorgangssignals A oder eines Schnellbremsungssignals B. Die Steuerungsvorrichtung 10 ist hier Teil einer zentralen Steuerung einer Leitsteuerung im Führerhaus eines Schienenfahrzeugs. In dem hier beschriebenen Fall ist die Steuerungsvorrichtung 10 nicht separat von der Leitsteuerung umfasst, sondern in die Systemarchitektur der Leitsteuerung eingebunden. Dasselbe ist auf die von der Steuerungsvorrichtung 10 umfassten Komponenten anwendbar, sofern diese auch für andere Zwecke der Leitsteuerung einsetzbar sind. Eine Anzeige der Leitsteuerung ist derart konfiguriert, dass zumindest die Ergebnisse der Überwachung des Betriebsbremssystems 30 angezeigt werden. Die visuelle Überwachungsmöglichkeit kann zudem kritische Zustände, wie die Annäherung an einen vorbestimmten Grenzwert, durch farbliche Kennzeichnung oder dergleichen für einen Bediener verdeutlichen. Gleichermaßen können entsprechende Zustände auch akustisch gekennzeichnet werden. Auch wenn die Steuerungsvorrichtung primär einen automatisierten Bremsvorgang steuert, kann der Bediener gerade im Bereich kritischer Zustände ggf. nach eigenem Ermessen frühzeitiger eingreifen.

Wird zum Auslösen des Schnellbremsungsbefehls ein Schnellbremsungsvorgangssignal A von der Eingabeeinheit 1 an die Steuerungsvorrichtung 10 weitergeleitet, so wird über die Steuereinheit 100 direkt der Schnellbremsungsvorgang über das Schnellbremssystem 20 eingeleitet. Im Gegensatz dazu wird bei Auslösen des Schnellbremsungsbefehls ein Schnellbremsungssignal B von der Eingabeeinheit 1 an die Steuerungsvorrichtung 10 weitergeleitet, so wird dieses über die Empfangseinheit 110 der Steuereinheit 100 empfangen und hierüber zunächst gemäß vorbestimmter Bremsvorgaben, beispielsweise der Vorgabe einer Zugverzögerung von 1,3 m/s², der Bremsvorgang über das Betriebsbremssystem 30 eingeleitet. Gleichzeitig wird der Schnellbremsvorgang über das Schnellbremssystem 20 zurückgehalten. In der gezeigten Ausführungsform wird dies über die Auswerteeinheit 120 umgesetzt, über deren Auswertung die Zurückhaltung auch wieder ergebnisabhängig beendet werden kann.

Nach Auslösen des Schnellbremsungsbefehls über das Schnellbremsungssignal B wird der Bremsvorgang über das Betriebsbremssystem 30 solange fortgesetzt, bis der Zug über die Bremswirkung des Bremsvorgangs über das Betriebsbremssystem 30 zum Stillstand gekommen ist, oder die Auswerteeinheit 120 detektiert, dass zumindest eine der über die Empfangseinheit 110 empfangenen Überwachungsgrößen C einen vorgegebenen Grenzwert und/oder eine vorgegebene Bedingung nicht einhält oder über die Empfangseinheit 1 ein Schnellbremsungsvorgangssignal A eingegeben wurde, oder das Schnellbremsungssignal B aufgehoben wurde. Bei der entsprechenden Detektion im Hinblick auf die Überwachungsgrößen C oder das Schnellbremsungsvorgangssignal A veranlasst die Auswerteeinheit 120 die Beendigung der Zurückhaltung des Schnellbremsungsvorgangs über das Schnellbremssystem 20 und leitet den Schnellbremsungsvorgang über das Schnellbremssystem 20 ein. In diesem Ausführungsbeispiels wird dabei durch die Auswerteeinheit gleichzeitig oder mit definierter Verzögerung die Beendigung des Bremsvorgangs über das Betriebsbremssystem 30 veranlasst.

Die Erfindung ist nicht auf die beschriebenen Ausführungsformen beschränkt. Auch wenn beispielsweise gemäß **Figur** 2 eine gemeinsame Eingabeeinheit für das Auslösen eines Schnellbremsungsbefehls über ein Schnellbremsungsvorgangssignal oder ein Schnellbremsungssignal gezeigt ist, können für das jeweilige Signal auch separate Eingabeeinheiten vorgesehen werden. Die direkte Ansteuerung des Schnellbremsungsvorgangs über das Schnellbremssystem auf Basis eines Schnellbremsungsvorgangssignals muss auch nicht notwendigerweise über die Steuerungsvorrichtung oder die Steuereinheit oder die im Fall der Beendigung der Rückhaltung dazu exemplarisch beschriebene Auswerteeinheit erfolgen, sondern kann hiervon unabhängig vorgesehen werden.

### BEZUGSZEICHENLISTE

- 1: Eingabeeinheit
- 10: Steuerungsvorrichtung
- 20: Schnellbremssystem
- 30: Betriebsbremssystem
- 100: Steuereinheit
- 110: Empfangseinheit
- 120: Auswerteeinheit
- "0": nein
- "1": ja
- A: Schnellbremsungsvorgangssignal
- B: Schnellbremsungssignal
- C: Überwachungsgrößen
- E1: Liegt ein Schnellbremsungsvorgangssignal an?
- E2: Liegt ein Schnellbremsungsvorgangssignal an oder hält eine Überwachungsgrenze vorbestimmte Vorgaben nicht ein?
- SA: Auslösen eines Schnellbremsungsbefehls
- SB: Zurückhalten eines Schnellbremsungsvorgangs und Einleiten eines Bremsvorgangs über ein Betriebsbremssystem
- SC: Überwachen der Bremswirkung des über das Betriebsbremssystem veranlassten Bremsvorgangs und ereignisabhängiger Signale
- SD: Beenden des Zurückhaltens des Schnellbremsungsvorgangs und Einleiten des Schnellbremsungsvorgangs über das Schnellbremssystem

## Patentansprüche

1. Verfahren zur Schnellbremsung eines Schienenfahrzeugs mit definierten Bremsvorgaben, aufweisend die folgenden Schritte:
(SA) Auslösen eines Schnellbremsungsbefehls,
(SB) Zurückhalten eines Schnellbremsungsvorgangs und Einleiten eines Bremsvorgangs über ein Betriebsbremssystem (30),
(SC) Überwachen der Bremswirkung des über das Betriebsbremssystem (30) veranlassten Bremsvorgangs, und
(SD) Beenden des Zurückhaltens des Schnellbremsungsvorgangs und Einleiten des Schnellbremsungsvorgangs über ein Schnellbremssystem, wenn durch die Überwachung keine ausreichende Bremswirkung detektiert wird,
**dadurch gekennzeichnet, dass**
Schritt (SD) in Abhängigkeit von vorbestimmten Risikoklassen eingeleitet wird.

2. Verfahren nach Anspruch 1, wobei der über den in Schritt (SA) ausgelösten Schnellbremsungsbefehl eingeleitete Bremsvorgang über das Betriebsbremssystem (30) derart angesteuert wird, dass der Bremsvorgang über das Betriebsbremssystem (30) zum Verhalten des Schnellbremsungsvorgangs über das Schnellbremssystem (20) korrespondiert, insbesondere dieses nachbildet.

3. Verfahren nach Anspruch 1 oder 2, wobei das Einleiten des Schnellbremsungsvorgangs über das Schnellbremssystem (20) parallel zum Bremsvorgang über das Betriebsbremssystem (30) erfolgt.

4. Verfahren nach Anspruch 1 oder 2, wobei das Einleiten des Schnellbremsungsvorgangs über das Schnellbremssystem (20) den Bremsvorgang über das Betriebsbremssystem (30) ablöst.

5. Verfahren nach einem der vorhergehenden Ansprüche, wobei die Bremswirkung anhand einer aktuellen Bremskraft und/oder eines Bremswegs und/oder des zeitlichen Verlaufs der aktuellen Bremskraft und/oder des Bremswegs überwacht wird.

6. Verfahren nach einem der vorhergehenden Ansprüche, wobei in Schritt (SC) neben der Bremswirkung auch ereignisabhängige Signale überwacht werden, die das Beenden des Zurückhaltens des Schnellbremsungsvorgangs und Einleiten des Schnellbremsungsvorgangs über das Schnellbremssystem (20) in Schritt (SD) auslösen können.

7. Verfahren nach einem der vorhergehenden Ansprüche, wobei in Schritt (SC) schienenfahrzeugseitige und/oder schienenstreckenseitige Signale überwacht werden.

8. Verfahren nach einem der vorhergehenden Ansprüche, wobei in Schritt (SA) die Schnellbremsung über das Schnellbremssystem (20) direkt eingeleitet wird, wenn das Auslösen des Schnellbremsungsbefehls in Schritt (SA) durch ein vorbestimmtes Schnellbremsungsvorgangssignal (A) initiiert wird.

9. Verfahren nach einem der vorhergehenden Ansprüche, wobei das Beenden des Zurückhaltens des Schnellbremsungsvorgangs und Einleiten des Schnellbremsungsvorgangs über das Schnellbremssystem (20) in Schritt (SD) durch ein oder das vorbestimmte Schnellbremsungsvorgangssignal (A) ausgelöst wird.

10. Steuerungsvorrichtung (10), die dazu konfiguriert ist, das Verfahren nach einem der Ansprüche 1 bis 9 durchzuführen, aufweisend:
eine Steuereinheit (100), die dazu konfiguriert ist, zumindest einen Schnellbremsungsbefehl zu empfangen und auf Basis des Schnellbremsungsbefehls ein Betriebsbremssystem (30) und/oder ein Schnellbremssystem (20) anzusteuern.

11. Steuerungsvorrichtung (10) nach Anspruch 10, wobei die Steuereinheit (100) dazu konfiguriert ist, die Bremswirkung des Betriebsbremssystems (30) repräsentierende Überwachungssignale, insbesondere die Bremswirkung des Betriebsbremssystems (30) repräsentierende Überwachungssignale und ereignisabhängige Signale, zu empfangen.

12. Steuerungsvorrichtung (10) nach Anspruch 11, wobei die Steuereinheit (100) eine Auswerteeinheit (120) aufweist, die dazu konfiguriert ist, die Bremswirkung des Betriebsbremssystems (30) repräsentierende Überwachungssignale, insbesondere die Bremswirkung des Betriebsbremssystems repräsentierende Überwachungssignale und ereignisabhängige Signale, auszuwerten und in Abhängigkeit der Auswertung den Bremsvorgang über ein Betriebsbremssystem (30) fortzusetzen oder das Beenden des Zurückhaltens des Schnellbremsungsvorgangs und Einleiten des Schnellbremsungsvorgangs über das Schnellbremssystem (20) vorzusehen.

13. Steuerungsvorrichtung (10) nach Anspruch 11 oder 12, wobei die Steuereinheit (100) dazu konfiguriert ist, das Schnellbremssystem (20) auf Basis eines vorbestimmten Schnellbremsungsvorgangssignals (A) direkt anzusteuern oder das Zurückhalten des Schnellbremsungsvorgangs zu beenden und den Schnellbremsungsvorgang über das Schnellbremssystem (20) einzuleiten.

14. Steuerungsvorrichtung (10) nach einem der Ansprüche 10 bis 13, wobei die Steuereinheit (100) dazu konfiguriert ist, schienenfahrzeugseitige und/oder schienenstreckenseitige Überwachungsgrößen (C) und/oder Schnellbremsungsvorgangssignale (A) zu empfangen.

15. Steuerungsvorrichtung (10) nach einem der Ansprüche 10 bis 14, wobei die Steuerungsvorrichtung (10) eine zentrale Steuerungsvorrichtung einer zentralen Leitstelle ist.

16. Computerprogrammprodukt, das dazu konfiguriert ist, bei der Ausführung des Programms durch einen Computer diesen veranlassen die Verfahrensschritte nach einem der Ansprüche 1 bis 9 automatisiert vorzunehmen.

## Claims

1. Method for the rapid braking of a rail vehicle with defined braking specifications, having the following steps:
(SA) triggering a rapid braking command,
(SB) suspending a rapid braking process and initiating a braking process via a service brake system (30),
(SC) monitoring the braking effect of the braking process initiated via the service brake system (30), and
(SD) ending the suspension of the rapid braking process and initiating the rapid braking process via a rapid braking system, if a sufficient braking effect is not detected by monitoring,
**characterized in that**
step (SD) is initiated as a function of predetermined risk classes.

2. Method according to claim 1, wherein the braking process initiated via the rapid braking command triggered in step (SA) is controlled via the service brake system (30) such that the braking process via the service brake system (30) corresponds to the behavior of the rapid braking process via the rapid braking system (20), in particular simulates the latter.

3. Method according to claim 1 or 2, wherein the initiation of the rapid braking process via the rapid braking system (20) is performed parallel to the braking process via the service brake system (30).

4. Method according to claim 1 or 2, wherein the initiation of the rapid braking process via the rapid braking system (20) replaces the braking process via the service brake system (30).

5. Method according to any one of the preceding claims, wherein the braking effect is monitored by means of a current braking force and/or a braking distance and/or the temporal progression of the current braking force and/or the braking distance.

6. Method according to any one of the preceding claims, wherein in step (SC), in addition to the braking effect, event-dependent signals are also monitored, which can trigger the end of the suspension of the rapid braking process and initiation of the rapid braking process via the rapid braking system (20) in step (SD).

7. Method according to any one of the preceding claims, wherein in step (SC) rail vehicle-side and/or track-side signals are monitored.

8. Method according to any one of the preceding claims, wherein in step (SA) the rapid braking is initiated directly via the rapid braking system (20), if the triggering of the rapid braking command in step (SA) is initiated by a predetermined rapid braking process signal (A).

9. Method according to any one of the preceding claims, wherein the end of the suspension of the rapid braking process and initiation of the rapid braking process via the rapid braking system (20) in step (SD) is triggered by one or the predetermined rapid braking process signal (A).

10. Control device (10), which is configured to perform the method according to any one of claims 1 to 9, having:
a control unit (100) which is configured to receive at least one rapid braking command and to control a service brake system (30) and/or and a rapid braking system (20) based on the rapid braking command.

11. Control device (10) according to claim 10, wherein the control unit (100) is configured to receive monitoring signals representing the braking effect of the service brake system (30), in particular monitoring signals representing the braking effect of the service brake system (30) and event-dependent signals.

12. Control device (10) according to claim 11, wherein the control unit (100) has an evaluation unit (120), which is configured to evaluate the monitoring signals representing the braking effect of the service brake system (30), in particular monitoring signals representing the braking effect of the service brake system and event-dependent signals, and, as a function of the evaluation, to continue the braking process via a service brake system (30) or to end the suspension of the rapid braking process and initiate the rapid braking process via the rapid braking system (20).

13. Control device (10) according to claim 11 or 12, wherein the control unit (100) is configured to directly control the rapid braking system (20) on the basis of a predetermined rapid braking process signal (A) or to end the suspension of the rapid braking process and initiate the rapid braking process via the rapid braking system (20).

14. Control device (10) according to any one of claims 10 to 13, wherein the control unit (100) is configured to receive rail vehicle-side and/or track-side monitoring variables (C) and/or rapid braking process signals (A).

15. Control device (10) according to any one of claims 10 to 14, wherein the control device (10) is a central control device of a central control center.

16. Computer program product, which is configured, on execution of the program by a computer, to cause the computer to automatically perform the method steps according to any one of claims 1 to 9.

## Revendications

1. Procédé de freinage rapide d'un véhicule ferroviaire à spécifications de freinage définies, présentant les étapes suivantes :
(SA) déclenchement d'un ordre de freinage rapide,
(SB) retenue d'un processus de freinage rapide et initiation d'un processus de freinage par le biais d'un système de frein de service (30),
(SC) surveillance de l'action de freinage du processus de freinage provoqué par le biais du système de frein de service (30), et
(SD) fin de la retenue du processus de freinage rapide et initiation du processus de freinage rapide par le biais d'un système de freinage rapide lorsqu'aucune action de freinage suffisante n'est détectée par la surveillance,
**caractérisé en ce que**
l'étape (SD) est initiée en fonction de classes de risques prédéterminées.

2. Procédé selon la revendication 1, dans lequel le processus de freinage initié par le biais de l'ordre de freinage rapide déclenché à l'étape (SA) est commandé par le biais du système de frein de service (30) de telle manière que le processus de freinage par le biais du système de frein de service (30) corresponde au comportement du processus de freinage rapide par le biais du système de freinage rapide (20), en particulier le reproduit.

3. Procédé selon la revendication 1 ou 2, dans lequel l'initiation du processus de freinage rapide par le biais du système de freinage rapide (20) est effectuée parallèlement au processus de freinage par le biais du système de frein de service (30).

4. Procédé selon la revendication 1 ou 2, dans lequel l'initiation du processus de freinage rapide par le biais du système de freinage rapide (20) remplace le processus de freinage par le biais du système de freinage de service (30).

5. Procédé selon l'une quelconque des revendications précédentes, dans lequel l'action de freinage est surveillée à l'aide d'une force de freinage actuelle et/ou d'une course de freinage et/ou de l'étendue temporelle de la force de freinage actuelle et/ou de la course de freinage,

6. Procédé selon l'une quelconque des revendications précédentes, dans lequel à l'étape (SC), outre l'action de freinage, des signaux dépendant de l'évènement sont aussi surveillés, lesquels peuvent déclencher la fin de la retenue du processus de freinage rapide et l'initiation du processus de freinage rapide par le biais du système de freinage rapide (20) à l'étape (SD).

7. Procédé selon l'une quelconque des revendications précédentes, dans lequel à l'étape (SC), des signaux côté véhicule ferroviaire et/ou côté ligne ferroviaire sont surveillés.

8. Procédé selon l'une quelconque des revendications précédentes, dans lequel à l'étape (SA), le freinage rapide est initié directement par le biais du système de freinage rapide (20) lorsque le déclenchement de l'ordre de freinage rapide est initié à l'étape (SA) par un signal de processus de freinage rapide (A) prédéterminé.

9. Procédé selon l'une quelconque des revendications précédentes, dans lequel la fin de la retenue du processus de freinage rapide et de l'initiation du processus de freinage rapide est déclenchée par le biais du système de freinage rapide (20) à l'étape (SD) par un ou le signal de processus de freinage rapide (A) prédéterminé.

10. Système de commande (10) qui est configuré afin de réaliser le procédé selon l'une quelconque des revendications 1 à 9 présentant :
un dispositif de commande (100) qui est configuré afin de recevoir au moins un ordre de freinage rapide et de commander un système de frein de service (30) et/ou un système de freinage rapide (20) sur la base de l'ordre de freinage rapide.

11. Système de commande (10) selon la revendication 10, dans lequel le dispositif de commande (100) est configuré afin de recevoir des signaux de surveillance représentant l'action de freinage du système de frein de service (30), en particulier des signaux de surveillance représentant l'action de freinage du système de frein de service (30) et des signaux dépendant de l'évènement.

12. Système de commande (10) selon la revendication 11, dans lequel le dispositif de commande (100) présente une unité d'évaluation (120) qui est configurée afin d'évaluer des signaux de surveillance représentant l'action de freinage du système de frein de service (30), en particulier des signaux de surveillance représentant l'action de freinage du système de frein de service et des signaux dépendant de l'évènement et, en fonction de l'évaluation, de poursuivre le processus de freinage par le biais d'un système de frein de service (30) ou de prévoir la fin de la retenue du processus de freinage rapide et initier le processus de freinage rapide par le biais du système de freinage rapide (20).

13. Système de commande (10) selon la revendication 11 ou 12, dans lequel le dispositif de commande (100) est configuré afin de commander directement le système de freinage rapide (20) sur la base d'un signal de processus de freinage rapide (A) prédéterminé ou de terminer la retenue du processus de freinage rapide et d'initier le processus de freinage rapide par le biais du système de freinage rapide (20).

14. Système de commande (10) selon l'une quelconque des revendications 10 à 13, dans lequel le dispositif de commande (100) est configuré afin de recevoir des grandeurs de surveillance (C) et/ou des signaux de processus de freinage rapide (A) côté véhicule ferroviaire et/ou côté ligne ferroviaire.

15. Système de commande (10) selon l'une quelconque des revendications 10 à 14, dans lequel le système de commande (10) est un système de commande central d'un centre de contrôle central.

16. Produit de programme informatique qui est configuré pour amener un ordinateur, lors de la réalisation du programme par celui-ci, à entreprendre de manière automatisée les étapes de procédé selon l'une quelconque des revendications 1 à 9.
